# EUROPÄISCHE PATENTANMELDUNG

(11) **EP 4 672 867 A1**
(43) Veröffentlichungstag der Anmeldung: **31.12.2025**
(21) Anmeldenummer: 24184386.1
(22) Anmeldetag: 25.06.2024
(51) Int. Cl.: H05B 47/155, H05B 47/165, H05B 47/18, B60Q 3/00

(54) **VERNETZTES BELEUCHTUNGSSYSTEM SOWIE VERFAHREN ZUM STEUERN EINER BELEUCHTUNGSANIMATION IN EINEM FAHRZEUG**

(71) Anmelder: Elmos Semiconductor SE, 44227 Dortmund (DE)
(72) Erfinder: Bhagwat, Hrishikesh, 560035 Bangalore (IN); Schmitz, Christian, 44575 Castrop-Rauxel (DE); Geisert, Thomas, 59581 Warstein (DE); Pyka, Robert, 40627 Düsseldorf (DE); Oehrle, Patrick, 44532 Lünen (DE)
(74) Vertreter: Banse & Steglich Patentanwälte PartmbB

(57) **Zusammenfassung**

Die Erfindung betrifft ein Verfahren zum Betreiben eines Beleuchtungssystems (1) mit einem Beleuchtungssystem-Master (5) und über ein Bussystem (4) angeschlossenen mehreren Beleuchtungsmodulen (3), wobei an die Beleuchtungsmodule (3) jeweils ein oder mehrere Leuchtquellen (2) anschließbar sind, mit folgenden Schritten:
- Aufeinanderfolgendes Übermitteln (S2, S3) von Beleuchtungssequenzdaten an die Beleuchtungsmodule (3), wobei die Beleuchtungssequenzdaten eine oder mehrere Beleuchtungssequenzen für das jeweilige Beleuchtungsmodul (3) vorgeben;
- Speichern der Beleuchtungssequenzdaten in einem Speicher (33) in dem jeweiligen Beleuchtungsmodul (3);
- Übermitteln (S4) eines Startbefehls über das Bussystem (4) an alle Beleuchtungsmodule (3) von dem Beleuchtungssystem-Master (5);
- Bei Empfangen des Startbefehls durch die Beleuchtungsmodule (3), Starten (S5) eines Abspielens der oder einer der mehreren Beleuchtungssequenzen entsprechend der in dem Speicher (33) gespeicherten Beleuchtungssequenzdaten.

## Beschreibung

### Technisches Gebiet

Die Erfindung betrifft Beleuchtungssysteme für Fahrzeuge, insbesondere Beleuchtungssysteme für eine Fahrgastraumbeleuchtung oder eine Außenbeleuchtung mit mehreren Leuchtquellen, die jeweils in Leuchtfarbe und Leuchtintensität angepasst werden können. Die Erfindung betrifft weiterhin vernetzte Beleuchtungssysteme mit Beleuchtungsmodulen, die gesteuert werden können, um eine Beleuchtungsanimation in/an einem Fahrzeug vorzunehmen.

### Technischer Hintergrund

Beleuchtungssysteme in Fahrzeugen können beispielsweise als eine Fahrgastraumbeleuchtung vorgesehen sein, die eine Vielzahl von Leuchtquellen umfasst. Diese gewährleisten zum einen eine ausreichende Ausleuchtung in verschiedenen Bereichen und ermöglichen zum anderen einen an einen Anlass angepassten Beleuchtungseffekt einzustellen. Auch können derartige Beleuchtungssysteme durch individuelle Einstellung der Leuchtquellen Stimmungen hervorrufen, die manuell oder automatisch von einem Fahrerassistenzsystem vorgegeben werden können. Dazu können die Leuchtquellen individuell in ihren Leuchteigenschaften, d.h. in ihrer Leuchtfarbe und Leuchtintensität, angepasst werden.

Zur individuellen Steuerung der Leuchteigenschaften jeder der Leuchtquellen sind diese in Beleuchtungsmodulen vorgesehen, die die Leuchteigenschaften einstellen und die miteinander über einen Feldbus, vorzugsweise einen LIN-(Local Interconnecting Network-)Bus miteinander verbunden sind. Herkömmliche Feldbusprotokolle ermöglichen es damit, gesteuert durch einen Bus-Master für die Leuchtquellen die auszugebende Leuchtfarbe und Leuchtintensität einzustellen.

Zunehmend sollen jedoch anlassbezogen die Leuchtquellen animiert werden, so dass in einem Wechselspiel von Farbänderungen und Leuchtintensitätsänderungen der einzelnen Leuchtquellen visuelle Effekte in Form von Beleuchtungsanimationen hervorgerufen werden sollen. Diese sollen automatisch oder manuell vorgegeben werden können.

Diese Animationen erfordern jedoch zeitlich aufeinander abgestimmte schnelle Wechsel und zeitliche Übergänge der auszugebenden Leuchtfarben und/oder Leuchtintensitäten für die einzelnen Beleuchtungsmodule, die vorzugsweise mit einer Frequenz von mehr als 25 Hz, vorzugsweise 100 Hz, eingestellt werden sollen. Auch sollen die abzuspielenden Beleuchtungssequenzen von Farb- und Leuchtintensitätsänderungen der einzelnen Beleuchtungsmodule aufeinander abgestimmt oder synchronisiert sein.

Herkömmlich verwendete Feldbussysteme, wie beispielsweise ein LIN-Bussystem (LIN: Local Interconnecting Network), benötigen zum Übertragen eines Datenpakets von einem LIN-Bus-Master zu einem Beleuchtungsmodul zwischen 4 und 20 ms, so dass bei mehreren in einer Beleuchtungsanimation involvierten Beleuchtungsmodulen die Datenrate zur Übertragung an alle Beleuchtungsmodule nicht ausreicht, um synchronisierte und fließend erscheinende Beleuchtungsanimationen abzuspielen.

Es ist Aufgabe der vorliegenden Erfindung, ein Beleuchtungssystem bereitzustellen, mit dem es möglich ist, über einen Feldbus miteinander verbundene Beleuchtungsmodule so anzusteuern, dass Beleuchtungsanimationen mit zueinander synchronisierten und fließend erscheinende Sequenzen von Farbänderungen und/oder Leuchtintensitätsänderungen möglich sind.

### Offenbarung der Erfindung

Diese Aufgabe wird durch das Verfahren zum Betreiben eines Beleuchtungssystems nach Anspruch 1 sowie ein Beleuchtungsmodul, ein Beleuchtungssystem-Master, ein Beleuchtungssystem sowie ein Verfahren zum Betreiben eines Beleuchtungsmoduls gemäß den nebengeordneten Ansprüchen gelöst.

Weitere Ausgestaltungen sind in den abhängigen Ansprüchen angegeben.

Gemäß einem ersten Aspekt ist ein Verfahren zum Betreiben eines Beleuchtungssystems mit einem Beleuchtungssystem-Master und über ein Bussystem angeschlossenen mehreren Beleuchtungsmodulen vorgesehen, wobei an die Beleuchtungsmodule jeweils ein oder mehrere Leuchtquellen anschließbar sind, mit folgenden Schritten:
- Aufeinanderfolgendes Übermitteln von Beleuchtungssequenzdaten an die Beleuchtungsmodule, wobei die Beleuchtungssequenzdaten eine oder mehrere Beleuchtungssequenzen für das jeweilige Beleuchtungsmodul vorgeben;
- Speichern der Beleuchtungssequenzdaten in einem Speicher in dem jeweiligen Beleuchtungsmodul;
- Übermitteln eines Startbefehls über das Bussystem an alle Beleuchtungsmodule von dem Beleuchtungssystem-Master;
- Bei Empfangen des Startbefehls durch die Beleuchtungsmodule, Starten eines Abspielens der einen oder einer der mehreren Beleuchtungssequenzen entsprechend der in dem Speicher gespeicherten Beleuchtungssequenzdaten.

Gemäß einem weiteren Aspekt ist ein Verfahren zum Betreiben eines Beleuchtungssystem-Masters eines Beleuchtungssystems vorgesehen, wobei der Beleuchtungssystem-Master über ein Bussystem mit mehreren Beleuchtungsmodulen in Kommunikationsverbindung steht, wobei an die Beleuchtungsmodule jeweils ein oder mehrere Leuchtquellen anschließbar sind, mit folgenden Schritten:
- Aufeinanderfolgendes Übertragen von Beleuchtungssequenzdaten über das Bussystem, wobei die Beleuchtungssequenzdaten eine oder mehrere Beleuchtungssequenzen für ein jeweils adressiertes Beleuchtungsmodul vorgeben;
- Nachdem für alle Beleuchtungsmodule Beleuchtungssequenzdaten übertragen sind, Übermitteln eines Startbefehls über das Bussystem.

Gemäß einem weiteren Aspekt ist ein Verfahren zum Betreiben eines Beleuchtungsmoduls eines Beleuchtungssystems vorgesehen, wobei an das Beleuchtungsmodul jeweils ein oder mehrere Leuchtquellen anschließbar sind, mit folgenden Schritten:
- Empfangen von Beleuchtungssequenzdaten über das Bussystem, wobei die Beleuchtungssequenzdaten eine oder mehrere Beleuchtungssequenzen für das jeweilige Beleuchtungsmodul vorgeben;
- Speichern der Beleuchtungssequenzdaten in einem Speicher;
- Nach Empfangen eines Startbefehls über das Bussystem, Starten eines Abspielens der einen oder einer (z.B. durch den Startbefehl ausgewählten) der mehreren Beleuchtungssequenzen entsprechend der in dem Speicher gespeicherten Beleuchtungssequenzdaten.

Ein Beleuchtungssystem z.B. in einem Fahrgastraum kann eine Vielzahl von Beleuchtungsmodulen aufweisen, die jeweils eine Steuereinheit, einen Leistungstreiber und eine oder mehrere Leuchtquellen, insbesondere in Form von LEDs, aufweisen. Die Beleuchtungsmodule sind über ein Feldbussystem, insbesondere einen LIN-Bus, miteinander verbunden, so dass diese entsprechend dem Feldbusprotokoll (LIN-Bus-Protokoll) angesteuert werden können. Die Ansteuerung erfolgt mithilfe eines Beleuchtungssystem-Masters, der entsprechend dem Feldbusprotokoll die einzelnen Beleuchtungsmodule ansteuert, um Vorgaben für die einzustellende Leuchtfarbe und Leuchtintensität vorzunehmen. Gegebenenfalls können mehrere Beleuchtungssystem-Master über ein übergeordnetes Bussystem miteinander verbunden und angesteuert werden, um konzertierte Beleuchtungsvorgaben umzusetzen.

Die bisherige Konfiguration eines derartigen Beleuchtungssystems lässt die Einstellung von Leuchteigenschaften, wie einer Leuchtintensität und/oder einer Leuchtfarbe, entsprechend der Datenrate des LIN-Protokolls zu. Dies ist jedoch nicht geeignet, schnelle Farbwechsel und/oder fließend erscheinende kontinuierliche Übergänge zwischen Leuchtfarben und/oder Leuchtintensitäten zu realisieren, insbesondere wenn eine größere Anzahl von Beleuchtungsmodulen in dem Beleuchtungssystem vorgesehen sind und eine zeitliche Synchronisation der Änderungen der Leuchteigenschaften für die einzelnen Beleuchtungsmodule gewünscht ist.

So benötigt die Übermittlung eines Datenpakets von 8 Byte an ein Beleuchtungsmodul ca. 10 ms, so dass bereits bei Anzahlen von mehr als zehn Beleuchtungsmodulen ein fließender Übergang zwischen verschiedenen Leuchtfarben und verschiedenen Leuchtintensitäten nicht mehr realisierbar ist, da die Ansteuerung der einzelnen Beleuchtungsmodule mit einer Rate von ca. 100ms realisiert werden kann. Außerdem werden so die Übergänge zwischen Leuchtfarben und Leuchtintensitäten in den einzelnen Beleuchtungsmodulen versetzt übertragen, so dass die Farb- und Leuchtintensitätsänderungen nicht zueinander synchronisiert ablaufen können. Um einen fließenden Übergang zwischen Leuchtfarben und Leuchtintensitäten in einem Beleuchtungsmodul realisieren zu können, wären Aktualisierungsraten von 10 ms oder weniger wünschenswert, die jedoch mit herkömmlichen standardisierten Feldbussystemen, wie z.B. dem LIN-Bussystem nicht oder nur schwierig erreichbar sind.

Um diese Problematik zu überwinden, ist das obige Beleuchtungssystem vorgesehen, das mit der bisherigen Feldbusarchitektur aufgebaut sein kann. Dazu ist vorgesehen, jedem Beleuchtungsmodul nacheinander Beleuchtungssequenzdaten zu übermitteln, die in codierter Form eine oder mehrere Beleuchtungssequenzen angeben.

Die Beleuchtungssequenz kann eine Abfolge von einer oder mehreren Leuchtfarben und/oder einer oder mehreren Leuchtintensitäten und/oder eine kontinuierliche Änderung einer Leuchtfarbe und/oder einer Leuchtintensität während einer vorgegebenen Zeitdauer angeben.

Die Beleuchtungssequenzdaten können mindestens einen Befehl aufweisen, der innerhalb der Beleuchtungssequenz eine Änderung der Leuchtfarbe und/oder der Leuchtintensität durch Definition einer zeitlichen Änderung der Leuchtfarbe bzw. der Leuchtintensität während einer vorgegebenen Zeitdauer, insbesondere durch Angabe der Änderungsrate, vorgibt.

Insbesondere werden die Änderungen von Leuchtfarben und/oder Leuchtintensitäten so beschrieben, dass ausgehend von einem Anfangszustand die Änderung der Leuchtfarbe und/oder Leuchtintensität algorithmisch bestimmt sind, z.B. bei durch Werte codierten Leuchtfarben und Leuchtintensitäten durch eine Änderungsschrittweite für einen bestimmten Zeitabschnitt. Dies ermöglicht eine kompakte Beschreibung einer Beleuchtungssequenz, die die Funktion einer Leuchteinheit für ein Beleuchtungsmodul für eine längere Zeitspanne vorgeben kann.

Alternativ können durch die Beleuchtungssequenzdaten die Änderungen von Leuchtfarben und/oder Leuchtintensitäten durch Abfolgen von schnell aufeinanderfolgenden Leuchtfarben und Leuchtintensitäten vorgegeben werden, die in Form von Lookup-Tabellen in dem Speicher gespeichert werden. Durch Auslesen der Abfolgen und Abspielen der entsprechenden Leuchtfarben und Leuchtintensitäten können auch auf diese Weise Beleuchtungssequenzen mit fließenden Übergängen von Leuchtfarben und Leuchtintensitäten ausgegeben werden. Die Übermittlung dieser Abfolgen in den Speicher kann jedoch sehr langwierig sein.

Über den Bus-Master können die entsprechenden Beleuchtungssequenzdaten seriell an alle Beleuchtungsmodule übertragen werden. Mithilfe eines Startbefehls, das z.B. einem Broadcast-Signal entsprechen kann und das von dem Beleuchtungsbus-Master über die LIN-Bus-Leitung übermittelt wird, kann eine zuvor einprogrammierte Beleuchtungssequenz in allen Beleuchtungsmodulen gleichzeitig gestartet werden. Dabei kann der Startbefehl bei mehreren gespeicherten Beleuchtungssequenzen, eine ausgewählte zuvor gespeicherte Beleuchtungssequenz zum Abspielen definieren. Das Broadcast-Signal entspricht einem Feldbusbefehl, der von allen Beleuchtungsmodulen erkannt wird und als Instruktion zum Start der zuvor eingeschriebenen Beleuchtungssequenz interpretiert wird. Das Broadcast-Signal kann einem Datenrahmen entsprechen, durch dessen Zieladresse alle Beleuchtungsmodule gleichzeitig angesprochen werden können und dessen Inhalt oder dessen Identifier als Startbefehl interpretiert wird.

Durch jedes Beleuchtungsmodul wird so eine Beleuchtungssequenz entsprechend der Beleuchtungssequenzdaten abgespielt. Dies ermöglicht eine synchronisierte Beleuchtung durch die Leuchtquellen, obwohl die entsprechenden Beleuchtungssequenzdaten seriell an die einzelnen Beleuchtungsmodule übermittelt werden. Durch die Übermittlung in Form von Beleuchtungssequenzdaten können die Beleuchtungsmodule mit wenigen Datenpaketen programmiert werden, um Beleuchtungssequenzen von wenigen Sekunden bis hin zu Minuten ohne erneute Programmierung ausfüllen zu können. Durch mögliche Wiederholungen der Beleuchtungssequenz kann eine kontinuierliche Animation erreicht werden.

Gemäß einer weiteren Ausführungsform kann der Bus-Master in regelmäßigen Zeitabständen, wie beispielsweise einmal pro Sekunde, ein Synchronisierungs-Broadcast-Signal über das Bussystem senden, um die Abläufe der Beleuchtungssequenzen in den einzelnen Beleuchtungsmodulen zueinander zeitlich zu synchronisieren. Bei Empfangen des Synchronisierungs-Broadcast-Signals kann ein Zeitgeber in den Beleuchtungsmodulen jeweils auf einen vorgegebenen Wert synchronisiert werden. Dies ist vorteilhaft, da häufig die Taktfrequenzen der Steuereinheiten in den Beleuchtungsmodulen häufig erheblich, d. h. bis zu 15%, voneinander abweichen können und damit das synchronisierte Abspielen der Beleuchtungssequenz nach einiger Zeit die Synchronisierung verlieren würde.

Zum Speichern der Beleuchtungssequenzdaten ist in der Steuereinheit der Beleuchtungsmodule ein Speicher vorgesehen, um ein oder mehrere Datenpakete, die über den Feldbus empfangen worden sind, zu speichern. Der Speicher kann als flüchtiger oder nicht-flüchtiger Speicher vorgesehen sein. Auf diese Weise können auch mehrere verschiedene Beleuchtungssequenzen in dem Speicher gespeichert werden, die entsprechend durch ein Broadcastsignal ausgewählt und gleichzeitig gestartet werden können. Auf diese Weise ist es nicht notwendig, vor jeder Änderung einer Beleuchtungssequenz oder einer Beleuchtungsanimation eine Übertragung der Beleuchtungssequenzdaten an alle Beleuchtungsmodule vorzunehmen.

Es kann vorgesehen sein, dass während die Beleuchtungssequenz abgespielt wird, Beleuchtungssequenzdaten für eine weitere Beleuchtungsanimation an die Beleuchtungsmodule übertragen werden.

Gemäß einem weiteren Aspekt ist ein Beleuchtungssystem zum Bereitstellen einer Beleuchtungsanimation mit mehreren Leuchtquellen vorgesehen, umfassend:
- einen Beleuchtungssystem-Master
- mehrere Beleuchtungsmodule, an die jeweils ein oder mehrere Leuchtquellen anschließbar sind,
- ein Bussystem, das den Beleuchtungssystem-Master und die mehreren Beleuchtungsmodule miteinander verbindet,
- wobei der Beleuchtungssystem-Master ausgebildet ist, um
   ∘ aufeinanderfolgend oder seriell Beleuchtungssequenzdaten an die Beleuchtungsmodule zu übermitteln, wobei die Beleuchtungssequenzdaten eine oder mehrere Beleuchtungssequenzen für das jeweilige Beleuchtungsmodul vorgeben;
   o nachdem die Beleuchtungssequenzdaten an alle Beleuchtungsmodule übermittelt sind, einen Startbefehl über das Bussystem an alle Beleuchtungsmodule als Broadcast-Signal zu übermitteln,
- wobei die Beleuchtungsmodule ausgebildet sind, um
   ∘ die Beleuchtungssequenzdaten in einem Speicher zu speichern;
   o bei Empfangen des Startbefehls durch die Beleuchtungsmodule die eine oder eine der mehreren Beleuchtungssequenzen entsprechend der in dem Speicher gespeicherten Beleuchtungssequenzdaten zu starten.

Gemäß einem weiteren Aspekt ist ein Beleuchtungssystem-Master für ein Beleuchtungssystem zum Bereitstellen einer Beleuchtungsanimation mit mehreren Leuchtquellen vorgesehen, wobei der Beleuchtungssystem-Master über ein Bussystem mit mehreren Beleuchtungsmodulen verbindbar ist, wobei an die Beleuchtungsmodule jeweils ein oder mehrere Leuchtquellen anschließbar sind, wobei der Beleuchtungssystem-Master ausgebildet ist, zum:
- Aufeinanderfolgenden Übertragen von Beleuchtungssequenzdaten über das Bussystem, wobei die Beleuchtungssequenzdaten eine oder mehrere Beleuchtungssequenzen für ein jeweils adressiertes Beleuchtungsmodul vorgeben;
- Übermitteln eines Startbefehls über das Bussystem, nachdem für alle Beleuchtungsmodule Beleuchtungssequenzdaten übertragen sind.

Gemäß einem weiteren Aspekt ist ein Beleuchtungsmodul für ein Beleuchtungssystem zum Bereitstellen einer Beleuchtungsanimation mit mehreren Leuchtquellen vorgesehen, wobei das Beleuchtungsmodul ausgebildet ist, um
∘ Beleuchtungssequenzdaten zu empfangen, wobei die Beleuchtungssequenzdaten eine oder mehrere Beleuchtungssequenzen vorgeben;
∘ die Beleuchtungssequenzdaten in einem Speicher zu speichern;
∘ bei Empfangen des Startbefehls, die eine oder eine der mehreren Beleuchtungssequenzen entsprechend der in dem Speicher gespeicherten Beleuchtungssequenzdaten zu starten.

### Kurzbeschreibung der Zeichnungen

Ausführungsformen werden nachfolgend anhand der beigefügten Zeichnungen näher erläutert. Es zeigen:
- Figur 1: eine schematische Darstellung eines Beleuchtungssystems zur Durchführung von Beleuchtungsanimationen in einem Fahrgastraum;
- Figur 2: eine schematische Darstellung eines weiteren Beleuchtungssystems zur Durchführung von Beleuchtungsanimationen in einem Fahrgastraum;
- Figur 3: ein Flussdiagramm zur Veranschaulichung eines Verfahrens zum Betreiben des Beleuchtungssystems der Figur 1 oder der Figur 2; und
- Figur 4: ein Daten-Zeit-Diagramm zur Veranschaulichung des Ablaufs des Verfahrens zum Steuern einer Beleuchtungsanimation in dem Beleuchtungssystem der Figur 1 oder der Figur 2.

### Beschreibung von Ausführungsformen

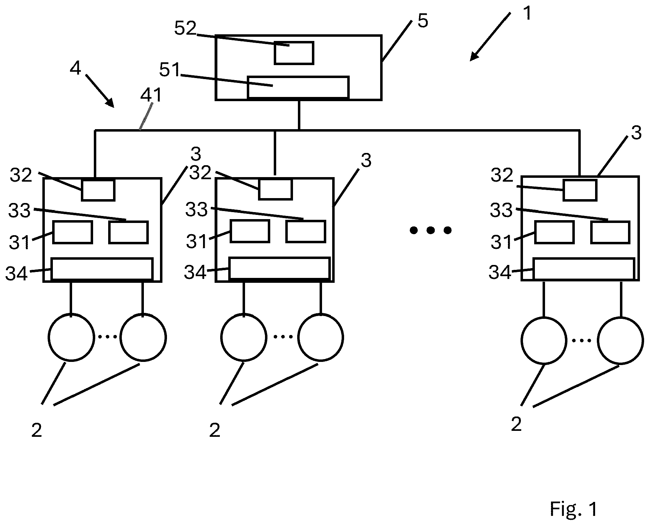

Figur 1 zeigt eine schematische Darstellung eines Beleuchtungssystems 1 zum Einsatz in einem Fahrgastraum in einem Kraftfahrzeug oder an einer Außenkontur eines Fahrzeugs. Das Beleuchtungssystem 1 kann beispielsweise eingesetzt werden, um eine Fahrgastraumbeleuchtung vorzusehen, bei der Leuchtquellen 2 individuell in ihrer Leuchtfarbe und ihrer Leuchtintensität einstellbar sind. Die Leuchtquellen 2 sind in der Regel mit einer oder mehreren LEDs oder mit vergleichbaren, in Ihrer Leuchtfarbe und Leuchtintensität einstellbaren Leuchtmitteln ausgestattet. Für eine Fahrgastraumbeleuchtung können die Leuchtquellen 2 an verschiedenen Positionen im Fahrgastraum, beispielsweise in der Fahrzeugtür, im Armaturenbrett, am Dachhimmel, an den Fahrzeugsitzen oder dergleichen angeordnet sein.

Das Beleuchtungssystem 1 umfasst dafür eine Vielzahl von Beleuchtungsmodulen 3, die an einem Bussystem 4 mit einer Busleitung 41 angeschlossen sind. Das Bussystem kann in Form eines LIN (Local Interconnecting Network) vorgesehen sein und eine oder mehrere Busleitungen 41 umfassen.

Das Bussystem 4 ist als Bussystem mit Sternstruktur vorgesehen und weist weiterhin einen Beleuchtungssystem-Master 5 auf, der zum Ansteuern der Beleuchtungsmodule 3 mithilfe eines vordefinierten Feldbus-Protokolls ausgelegt ist, um eine geeignete Beleuchtungsanimation vorzugeben und zu starten. Dazu werden entsprechend dem Feldbus-Protokoll von dem Beleuchtungssystem-Master 5 die Beleuchtungsmodule 3 nacheinander adressiert und entsprechend entsprechende Daten an das jeweils adressierte Beleuchtungsmodul 3 gesendet.

Eine Beleuchtungsanimation entspricht allgemein einem Abspielen von zeitlich zueinander synchronisierten Beleuchtungssequenzen der Leuchtquellen 2. Die Beleuchtungssequenz einer Leuchtquelle 2 entspricht einer Abfolge von Leuchtfarben und Leuchtintensitäten sowie deren zeitlichen Änderungen oder deren kontinuierlichen Übergänge entsprechend einer vorgegebenen Änderungsrate.

Die Beleuchtungsmodule 3 weisen jeweils eine Steuereinheit 31, eine Kommunikationseinheit 32, einen Speicher 33 und eine Ansteuerschnittstelle 34 auf.

Die Ansteuerschnittstelle 34 dient zum Ansteuern einer oder mehrerer Leuchtquellen 2, um diese in ihren Leuchteigenschaften, d.h. in ihrer Leuchtfarbe und/oder Leuchtintensität einzustellen. Die Ansteuerschnittstelle 34 kann dazu einen geeigneten Leistungstreiber oder dergleichen aufweisen.

Die Kommunikationseinheit 32 ist mit der Busleitung 41 verbunden und dient zum Senden und Empfangen von Daten, die entsprechend dem Feldbus-Protokoll von dem Beleuchtungssystem-Master 5 an das adressierte jeweilige Beleuchtungsmodul 3 gesendet werden. Die im Beleuchtungsmodul 3 empfangenen Daten können in geeigneter Weise in der Kommunikationseinheit 32 interpretiert werden und der "Payload" der Daten in dem Speicher 33 gespeichert werden.

Die Steuereinheit 31 ist ausgebildet, um die in dem Speicher 33 gespeicherten Daten als Beleuchtungssequenzcode zu interpretieren und eine Ansteuerung der einen oder der mehreren über die Ansteuerschnittstelle 34 angeschlossenen Leuchtquellen 2 durchzuführen. Die Ansteuerung gibt dabei eine durch den Beleuchtungssequenzcode vorgegebene Beleuchtungssequenz oder Beleuchtungssequenzen (zur Auswahl) für die betreffende Leuchtquelle 2 vor.

Der Beleuchtungssystem-Master 5 umfasst ebenfalls eine Kommunikationsschnittstelle 51 und eine Steuereinheit 52, so dass gesteuert durch die Steuereinheit 52 den einzelnen Beleuchtungsmodulen 3 Beleuchtungssequenzdaten übermittelt werden können, die eine Beleuchtungssequenz in vordefinierter Weise codiert repräsentieren. Der Beleuchtungssystem-Master 5 erhält beispielsweise von einem übergeordneten Bussystem eine Anforderung zur Durchführung einer bestimmten Beleuchtungsanimation, die Beleuchtungssequenzen für die einzelnen Leuchtquellen umfasst. Durch die zeitliche Synchronisation der Beleuchtungssequenzen für die einzelnen Leuchtquellen 2 kann so eine Beleuchtungsanimation im Fahrgastraum des Fahrzeugs realisiert werden, die ein bestimmtes Ambiente schafft oder eine bestimmte Funktion signalisiert.

Dabei ist vorteilhaft, dass die Beleuchtungssequenz nicht als Abfolge von schnell aufeinanderfolgend einzustellenden Leuchtintensitäten und Leuchtfarben übermittelt wird, sondern in codierter Form mit Instruktionen, die beispielsweise umfassen können:
- einen Einstellbefehl zum Einstellen der Leuchtfarbe und/oder Leuchtintensität,
- einen Leuchtintensitätsänderungsbefehl zum Ändern der Leuchtintensität, insbesondere ausgehend von einer zuvor eingestellten Leuchtintensität, innerhalb einer vorgegebenen Zeitdauer mit einer vorgegebenen Änderungsrate für den Wechsel der Leuchtintensität,
- einen Leuchtfarbeänderungsbefehl zum Ändern der Leuchtfarbe, insbesondere ausgehend von einer zuvor eingestellten Leuchtfarbe, innerhalb einer vorgegebenen Zeitdauer mit einer vorgegebenen Änderungsrate für den Farbübergang,
- einen Sequenzwiederholungsbefehl, der angibt, dass eine zuvor definierte Sequenz wiederholt werden soll,
- einen Startbefehl, der die zuvor gespeicherte Beleuchtungssequenz in allen Beleuchtungsmodulen zeitgleich startet.

Der Einstellbefehl, der Leuchtintensitätsänderungssbefehl und der Leuchtfarbeänderungsbefehl können aneinander gereiht werden, um komplexere Beleuchtungssequenzen zu definieren. Der Leuchtintensitätsänderungssbefehl und der Leuchtfarbeänderungsbefehl können auch vorgeben, eine Änderung für einen identischen Zeitabschnitt anzuwenden.

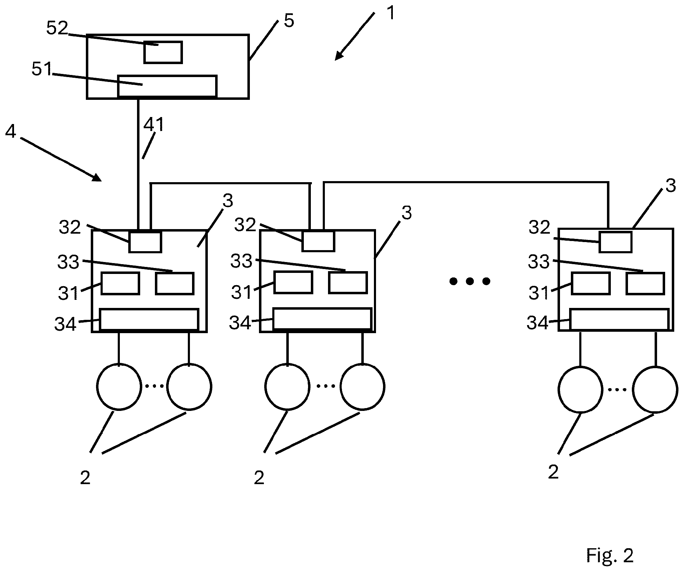

Figur 2 zeigt alternativ zu dem Beleuchtungssystem 1 der Figur 1 ein alternatives Bussystem 4, bei dem die Busleitung 41 in Form einer "Daisy-Chain" durch die Kommunikationseinheiten 31 der Beleuchtungsmodule 3 hindurchgeschleift werden.

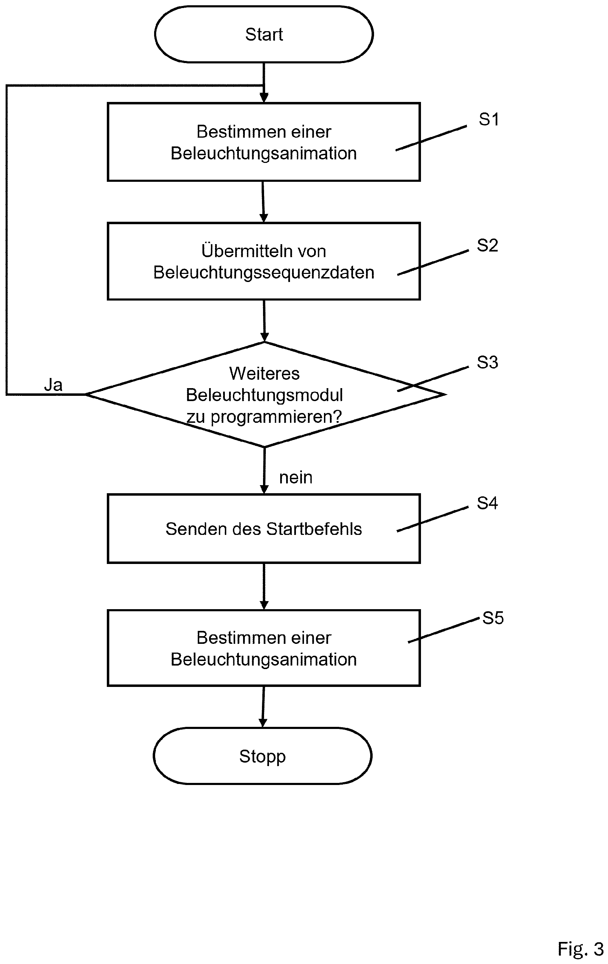

Fig. 3 zeigt ein Flussdiagramm zur Veranschaulichung eines Verfahrens zur Durchführung einer Beleuchtungsanimation in dem Beleuchtungssystem der Figur 1 oder der Figur 2.

In Schritt S1 wird zunächst von der Steuereinheit 52 des Beleuchtungssystems-Masters 5 eine Beleuchtungsanimation bestimmt, die mit dem Beleuchtungssystem durchgeführt werden soll. Die Beleuchtungsanimation besteht aus Beleuchtungssequenzen für die einzelnen Beleuchtungsmodule 3, die diesen übermittelt werden müssen.

Dazu wählt der Beleuchtungssystem-Master 5 eines der Beleuchtungsmodule 3 aus und übermittelt an dieses in Schritt S2 ein oder mehrere Datenpakete mit den entsprechenden Beleuchtungssequenzdaten für das betreffende Beleuchtungsmodul 2. Die Beleuchtungssequenzdaten enthalten codiert die Beleuchtungssequenz für das betreffende Beleuchtungsmodul 3.

In Schritt S3 wird überprüft, ob ein weiteres Beleuchtungsmodul 3 mit entsprechenden Beleuchtungssequenzdaten programmiert werden muss. Ist dies der Fall (Alternative: Ja), wird zu Schritt S2 zurückgesprungen und ein nächstes zu wählendes Beleuchtungsmodul 3 entsprechend programmiert. Anderenfalls (Alternative: Nein) wird das Verfahren mit Schritt S4 fortgesetzt.

In Schritt S4 der Startbefehl (Broadcast-Befehl) durch den Beleuchtungssystem-Master 5 gesendet, der von allen Beleuchtungsmodulen 3 empfangen wird und zum Starten des Abspielens der jeweiligen Beleuchtungssequenz durch jedes der Beleuchtungsmodule 3 auffordert.

In den Beleuchtungsmodulen 3 wird nun in Schritt S5 die entsprechende Beleuchtungssequenz abgespielt. Während die Beleuchtungssequenz abgespielt wird, können Beleuchtungssequenzdaten für eine weitere Beleuchtungsanimation an die Beleuchtungsmodule 3 übertragen werden.

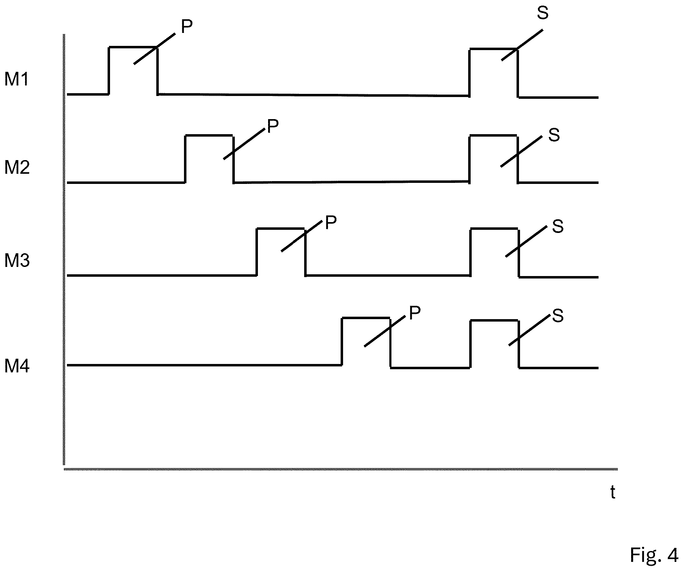

In Figur 4 ist ein Daten-Zeit-Diagramm dargestellt, das die zeitliche Abfolge der Übertragung von Datenpaketen P mit Beleuchtungssequenzdaten an mehrere Beleuchtungsmodule M1, M2, M3, M4 darstellt. Nach der Übertragung wird durch ein Datenpaket S, das einen Start-Befehl umfasst, der Beginn des Abspielens der Beleuchtungssequenz aktiviert.

Der Ablauf der Beleuchtungssequenz in den Beleuchtungsmodulen 3 wird entsprechend einem internen Taktgeber in den Beleuchtungsmodulen 3 zeitlich gesteuert. Da die Taktgeber in den einzelnen Beleuchtungsmodulen 3 bezüglich ihrer Taktfrequenz nicht zueinander synchronisiert sind und voneinander abweichen können, kann vorgesehen sein, dass der Beleuchtungssystem-Master 5 in regelmäßigen zeitlichen Abständen, wie beispielsweise jede Sekunde, ein Synchronisationssignal aussendet, das von allen Beleuchtungsmodulen 3 empfangen wird und verwendet wird, um die Zeitgeber in den Beleuchtungsmodulen 3 zueinander zu synchronisieren. Dies ermöglicht es, dass eine Beleuchtungsanimation mit zueinander synchronisierten Beleuchtungssequenzen der Leuchtquellen 2 durchgeführt wird.

## Patentansprüche

1. Verfahren zum Betreiben eines Beleuchtungssystems (1) mit einem Beleuchtungssystem-Master (5) und über ein Bussystem (4) angeschlossenen mehreren Beleuchtungsmodulen (3), wobei an die Beleuchtungsmodule (3) jeweils ein oder mehrere Leuchtquellen (2) anschließbar sind, mit folgenden Schritten:
- Aufeinanderfolgendes Übermitteln (S2, S3) von Beleuchtungssequenzdaten an die Beleuchtungsmodule (3), wobei die Beleuchtungssequenzdaten eine oder mehrere Beleuchtungssequenzen für das jeweilige Beleuchtungsmodul (3) vorgeben;
- Speichern der Beleuchtungssequenzdaten in einem Speicher (33) in dem jeweiligen Beleuchtungsmodul (3);
- Übermitteln (S4) eines Startbefehls über das Bussystem (4) an alle Beleuchtungsmodule (3) von dem Beleuchtungssystem-Master (5);
- Bei Empfangen des Startbefehls durch die Beleuchtungsmodule (3), Starten (S5) eines Abspielens der oder einer der mehreren Beleuchtungssequenzen entsprechend der in dem Speicher (33) gespeicherten Beleuchtungssequenzdaten.

2. Verfahren zum Betreiben eines Beleuchtungssystem-Master (5) eines Beleuchtungssystems (1), wobei der Beleuchtungssystem-Master (5) über ein Bussystem (4) mit mehreren Beleuchtungsmodulen (3) in Kommunikationsverbindung steht, wobei an die Beleuchtungsmodule (3) jeweils ein oder mehrere Leuchtquellen (2) anschließbar sind, mit folgenden Schritten:
- Aufeinanderfolgendes Übertragen (S2, S3) von Beleuchtungssequenzdaten über das Bussystem (4), wobei die Beleuchtungssequenzdaten eine oder mehrere Beleuchtungssequenzen für ein jeweils adressiertes Beleuchtungsmodul (3) vorgeben;
- Nachdem für alle Beleuchtungsmodule (3) Beleuchtungssequenzdaten übertragen sind, Übermitteln (S4) eines Startbefehls über das Bussystem (4).

3. Verfahren nach einem der Ansprüche 1 bis 2, wobei der Beleuchtungssystem-Master (5) in regelmäßigen Zeitabständen ein Synchronisierungs-Broadcast-Signal über das Bussystem (4) sendet.

4. Verfahren zum Betreiben eines Beleuchtungsmoduls (3) eines Beleuchtungssystems (1), wobei an das Beleuchtungsmodul (3) jeweils ein oder mehrere Leuchtquellen (2) anschließbar sind, mit folgenden Schritten:
- Empfangen von Beleuchtungssequenzdaten über das Bussystem, wobei die Beleuchtungssequenzdaten eine Beleuchtungssequenz für das jeweilige Beleuchtungsmodul (3) vorgeben;
- Speichern der Beleuchtungssequenzdaten in einem Speicher (33);
- Nach Empfangen eines Startbefehls über das Bussystem (4), Starten (S5) eines Abspielens der einen oder der mehreren Beleuchtungssequenzen entsprechend der in dem Speicher (33) gespeicherten Beleuchtungssequenzdaten.

5. Verfahren nach Anspruch 4, wobei bei Empfangen eines Synchronisierungs-Broadcast-Signals ein Zeitgeber in den Beleuchtungsmodulen (3) auf einen vorgegebenen Wert synchronisiert wird.

6. Verfahren nach einem der Ansprüche 1 bis 5, wobei die Beleuchtungssequenz einer Abfolge von einer oder mehreren Leuchtfarben und/oder einer oder mehreren Leuchtintensitäten und/oder eine kontinuierliche Änderung einer Leuchtfarbe und/oder einer Leuchtintensität während einer vorgegebenen Zeitdauer angibt.

7. Verfahren nach einem der Ansprüche 1 bis 6, wobei die Beleuchtungssequenzdaten mindestens einen Befehl aufweisen, der innerhalb der Beleuchtungssequenz eine Änderung der Leuchtfarbe und/oder der Leuchtintensität durch Definition einer zeitlichen Änderung der Leuchtfarbe bzw. der Leuchtintensität während einer vorgegebenen Zeitdauer, insbesondere durch Angabe der Änderungsrate, vorgibt.

8. Verfahren nach einem der Ansprüche 1 bis 7, wobei während die Beleuchtungssequenz abgespielt wird, Beleuchtungssequenzdaten für eine weitere Beleuchtungsanimation an die Beleuchtungsmodule (3) übertragen werden.

9. Beleuchtungssystem (1) zum Bereitstellen einer Beleuchtungsanimation mit mehreren Leuchtquellen (2), umfassend:
- einen Beleuchtungssystem-Master (5),
- mehrere Beleuchtungsmodule (3), an die jeweils ein oder mehrere Leuchtquellen (2) anschließbar sind,
- ein Bussystem (4), das den Beleuchtungssystem-Master und die mehreren Beleuchtungsmodule (3) miteinander verbindet,
- wobei der Beleuchtungssystem-Master (5) ausgebildet ist, um
∘ aufeinanderfolgend oder seriell Beleuchtungssequenzdaten an die Beleuchtungsmodule (3) zu übermitteln, wobei die Beleuchtungssequenzdaten eine oder mehrere Beleuchtungssequenzen für das jeweilige Beleuchtungsmodul (3) vorgeben;
∘ nachdem die Beleuchtungssequenzdaten an alle Beleuchtungsmodule (3) übermittelt sind, einen Startbefehl über das Bussystem (4) an alle Beleuchtungsmodule (3) als Broadcast-Signal zu übermitteln,
- wobei die Beleuchtungsmodule (3) ausgebildet sind, um
∘ die Beleuchtungssequenzdaten in einem Speicher (33) zu speichern;
∘ bei Empfangen des Startbefehls durch die Beleuchtungsmodule (3), die eine oder eine der mehreren Beleuchtungssequenzen entsprechend der in dem Speicher (33) gespeicherten Beleuchtungssequenzdaten zu starten.

10. Beleuchtungssystem (1) nach Anspruch 9, wobei das Bussystem (4) als ein Feldbus-System, insbesondere als ein LIN-Bussystem, ausgebildet ist und/oder wobei das Feldbus-System eine Sternstruktur oder eine Daisy-Chain-Struktur aufweist.

11. Beleuchtungssystem-Master (5) für ein Beleuchtungssystem, insbesondere für ein Beleuchtungssystem nach Anspruch 9, zum Bereitstellen einer Beleuchtungsanimation mit mehreren Leuchtquellen, wobei der Beleuchtungssystem-Master über ein Bussystem mit mehreren Beleuchtungsmodulen (3) verbindbar ist, wobei an die Beleuchtungsmodule (3) jeweils ein oder mehrere Leuchtquellen (2) anschließbar sind, wobei der Beleuchtungssystem-Master (5) ausgebildet ist, zum:
- Aufeinanderfolgenden Übertragen von Beleuchtungssequenzdaten über das Bussystem (4), wobei die Beleuchtungssequenzdaten eine oder mehrere Beleuchtungssequenzen für ein jeweils adressiertes Beleuchtungsmodul (3) vorgeben;
- Übermitteln eines Startbefehls über das Bussystem (4), nachdem für alle Beleuchtungsmodule (3) Beleuchtungssequenzdaten übertragen sind.

12. Beleuchtungsmodul (3) für ein Beleuchtungssystem (1), insbesondere für ein Beleuchtungssystem nach Anspruch 9, zum Bereitstellen einer Beleuchtungsanimation mit mehreren Leuchtquellen (2), wobei das Beleuchtungsmodul (3) ausgebildet ist, um
∘ Beleuchtungssequenzdaten zu empfangen, wobei die Beleuchtungssequenzdaten eine oder mehrere Beleuchtungssequenzen vorgeben;
∘ die Beleuchtungssequenzdaten in einem Speicher (33) zu speichern;
∘ bei Empfangen des Startbefehls, die eine oder eine der mehreren Beleuchtungssequenzen entsprechend der in dem Speicher (33) gespeicherten Beleuchtungssequenzdaten zu starten.
